# FASCICULE DE BREVET EUROPEEN

(11) **EP 2 611 597 B1**
(45) Date de publication et mention de la délivrance du brevet: **12.04.2017**
(21) Numéro de dépôt: 11749187.8
(22) Date de dépôt: 30.08.2011
(51) Int. Cl.: B29C 70/22, B29C 70/38, D04C 1/06, F16C 7/00

(54) **PROCÉDÉ DE FABRICATION D'UN ORGANE MÉCANIQUE EN MATÉRIAU COMPOSITE AYANT UNE TENUE MÉCANIQUE ACCRUE**
VERFAHREN ZUR HERSTELLUNG EINES MECHANISCHEN ELEMENTS AUS EINEM VERBUNDSTOFF MIT ERHÖHTER MECHANISCHER FESTIGKEIT
PROCESS FOR MANUFACTURING A MECHANICAL MEMBER MADE OF A COMPOSITE HAVING INCREASED MECHANICAL STRENGTH

(30) Priorité: 31.08.2010 FR 1056905
(43) Date de publication de la demande: 10.07.2013
(73) Titulaire: Safran Landing Systems, 78140 Vélizy-Villacoublay (FR)
(72) Inventeur: MASSON, Richard, F-78350 Les Loges En Josas (FR); DUNLEAVY, Patrick, F-91120 Palaiseau (FR)
(74) Mandataire: Beaudouin-Lafon, Emmanuel
(86) Numéro de dépôt international: PCT/EP2011/064873
(87) Numéro de publication internationale: WO 2012/028599

(56) Documents cités:
- EP-A1- 0 113 196
- EP-A1- 2 263 862
- WO-A1-2011/116967
- US-A- 3 007 497
- US-A- 4 992 313
- US-A- 5 101 556
- US-A1- 2003 110 733
- Frank K. Ko: "Braiding" In: D. B. Miracle & S. L. Donaldson: "Composites", décembre 2001 (2001-12), ACM International, USA, XP002626409, ISBN: 0871707039 vol. 21, pages 69-77, page 69 - page 73

## Description

L'invention concerne un procédé pour fabriquer en matériau composite un organe mécanique tel qu'une bielle de contrefiche d'atterrisseur d'aéronef.

### ARRIERE PLAN DE L'INVENTION

Il est connu, notamment du document de brevet FR2932409 de fabriquer une telle bielle à partir d'un mandrin sur lequel on tresse une ou plusieurs couches de fibres de carbone se superposant radialement les unes aux autres.

Cet ensemble est ensuite installé dans un moule pour injecter de la résine dans les différentes couches portées par le mandrin avant de polymériser cette résine, par exemple par chauffage, afin de constituer une bielle brute rigide pouvant être usinée au niveau de ses interfaces pour y former des chapes.

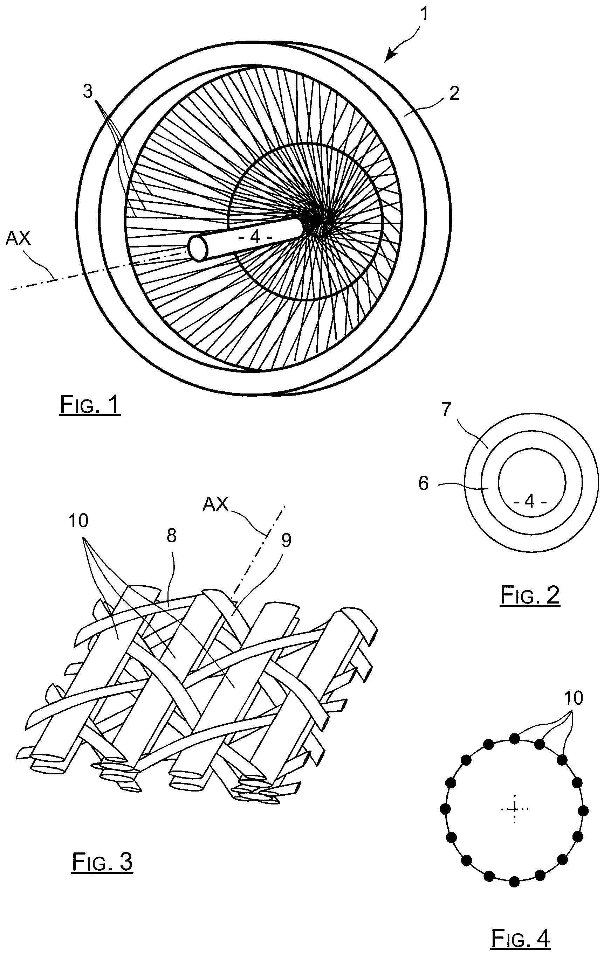

Le tressage des couches de fibres renforçantes est alors assuré avec une installation de tressage qui est représentée en figure 1 en y étant repérée par 1. Cette installation comporte essentiellement un anneau 2 s'étendant dans un plan vertical, l'axe central AX de cet anneau étant ainsi horizontal. Cet anneau 2 porte un ensemble de bobines de fibres renforçantes 3, convergeant vers une région située sur l'axe AX et décalée par rapport au plan de l'anneau.

Lorsque le cycle de tressage est lancé, le mandrin qui est repéré par 4 est déplacé le long de l'axe central AX pour traverser l'anneau 2 au delà du point de convergence des fibres. En même temps, les bobines portées sur l'anneau 2 par des supports mobiles motorisés sont actionnées pour se dérouler, de manière à fabriquer une chaussette de fibres renforçantes à la face externe de ce mandrin 4.

Cette chaussette recouvre le mandrin sur toute sa longueur une fois qu'il a complètement traversé l'anneau, c'est-à-dire une fois qu'il est situé au delà du point de convergence des fibres.

La couche de fibres renforçantes est alors sectionnée entre le mandrin et l'anneau, et le mandrin est démonté, puis replacé en arrière de l'anneau, afin de le traverser à nouveau pour la formation d'une seconde couche de fibres renforçantes se superposant radialement à la première.

Ainsi, comme représenté schématiquement en figure 2, on peut fabriquer une structure générale comportant dans sa région centrale le mandrin formant support pour deux couches de fibres tressées 6, 7, ou plus, qui s'étendent tout autour de celui-ci et sur toute sa longueur.

Concrètement, comme représenté en figure 3, une couche tressée comporte d'une part des fibres dites de fuseau 8 et 9 qui sont inclinées par exemple à environ trente degrés d'un côté et de l'autre par rapport à l'axe AX, et d'autre part des fibres longitudinales 10, parallèles à l'axe AX, qui sont maintenues en position par les fibres de fuseaux 8 et 9 qui les entrelacent.

En pratique, et comme visible sur la figure 3, chaque couche de fibres tressées est constituée de plusieurs sous-couches, niveaux, ou épaisseurs, comportant chacune une série de fibres longitudinales 10 situées les unes à côté des autres selon une disposition en claie. Les fibres de fuseaux 8 et 9 entrelacent les unes aux autres les fibres longitudinales 10 des différentes sous-couches, de manière à former un tout cohérent.

Lorsque les couches de fibres tressées ont été appliquées sur le mandrin, les fibres longitudinales 10 de chaque sous-couche sont réparties uniformément autour du mandrin 4 qui les porte, c'est-à-dire qu'elles sont régulièrement espacées les unes des autres autour de ce mandrin 4, comme illustré schématiquement sur la figure 4.

En service, un tel organe mécanique est soumis à des cas de charge mécanique relativement complexes, dont il résulte que la contrainte mécanique diffère d'une région à l'autre de cet organe.

Dans le cas d'un organe fabriqué par tressage, cette situation conduit à choisir l'épaisseur de fibres renforçantes à déposer sur l'ensemble du mandrin en fonction de la contrainte mécanique maximale subie par l'organe, cette contrainte maximale correspondant en fait uniquement à une région particulière de l'organe considéré.

Il s'ensuit que dans de une multitude de zones, l'organe est en fait surdimensionné, ce qui pénalise inutilement la masse totale de cet organe.

Des documents tels que EP2263862 et WO2011/116967 décrivent un procédé de fabrication d'un organe mécanique en matériau composite caractérisé en ce qu'au moins une opération de tressage et de dépôt est configurée pour former et déposer une tresse ayant dans au moins une section transversale de l'organe, une densité de fibres longitudinales qui diffère selon que l'on considère une première région angulaire autour du barycentre du mandrin dans cette section transversale ou une seconde région angulaire de même étendue autour de ce barycentre. Cela est réalisé par l'introduction d'éléments de renfort supplémentaires répartis de façon non homogène sur le périmètre de l'organe mécanique.

### OBJET DE L'INVENTION

Le but de l'invention est de proposer une solution pour remédier à cet inconvénient.

### RESUME DE L'INVENTION

A cet effet, l'invention a pour objet un procédé de fabrication d'un organe mécanique en matériau composite comportant plusieurs opérations de tressage et dépôt de couches de fibres renforçantes tressées, avec une tresseuse, chaque opération comprenant le tressage d'une couche de fibres renforçantes et son dépôt sur un mandrin par déplacement de ce mandrin le long d'un axe central de la tresseuse, les différentes couches de fibres tressées se superposant radialement les unes sur les autres, chaque couche de fibres tressées comportant d'une part des fibres longitudinales s'étendant parallèlement à une direction principale du mandrin, et d'autre part des fibres de fuseau inclinées par rapport à la direction principale, caractérisé en ce qu'au moins une opération de tressage et de dépôt est configurée pour former et déposer une tresse ayant dans au moins une section transversale de l'organe, une densité de fibres longitudinales qui diffère selon que l'on considère une première région angulaire autour du barycentre du mandrin dans cette section transversale ou une seconde région angulaire de même étendue autour de ce barycentre, le procédé comportant au moins une opération de tressage et de dépôt d'une couche de fibres tressées, dans laquelle le mandrin est positionné pour avoir son axe principal décalé radialement par rapport à l'axe central de la tresseuse lorsque ce mandrin est déplacé le long de l'axe central de la tresseuse, pour tresser et déposer une couche de fibres tressées présentant une quantité de fibres longitudinales qui est plus importante dans une première région qui est la plus proche de l'axe central de la tresseuse, que dans une seconde région qui est la plus éloignée de l'axe central de la tresseuse.

Avec cette solution, l'organe mécanique présente une plus grande épaisseur dans toute une partie s'étendant sur toute sa longueur, et une plus faible épaisseur dans la partie opposée.

L'invention concerne également un procédé tel que défini ci-dessus, comportant au moins une opération de tressage et de dépôt d'une couche de fibres tressées qui est conformée pour constituer une couche de fibres tressées comportant des fibres longitudinales ayant des calibres différents, et incluant des fibres longitudinales de fort calibre situées dans une première région de la couche tressée et des fibres longitudinales de faible calibre situées dans une seconde région de la couche tressée.

L'invention concerne également un procédé tel que défini ci-dessus, dans lequel on utilise une tresseuse comportant un anneau de tressage portant des bobines de fibres longitudinales agencées de telle manière que chaque couche de fibres tressées soit constituée de plusieurs sous-couches superposées incluant chacune une série fibres longitudinales agencées en claies, dans lequel une région de cet anneau est chargée avec des bobines de fibres longitudinales de gros calibre et une autre région de cet anneau est chargée avec des bobines de fibres longitudinales de faible calibre, et dans lequel la proportion de bobines de fibres de gros calibre et de bobines de fibres de faible calibre évolue graduellement d'une région à l'autre de l'anneau.

### BREVE DESCRIPTION DES FIGURES

La figure 1 est une représentation schématique montrant en perspective une tresseuse avec un mandrin destiné à recevoir une couche de fibres tressées ;
La figure 2 est une vue schématique en section transversale montrant les couches constituant une bielle en matériau composite connue ;
La figure 3 est une vue schématique montrant en perspective une portion de fibres renforçantes tressées comportant deux sous-couches ;
La figure 4 est une représentation schématique en section transversale montrant les fibres longitudinales d'une sous-couche faisant partie d'une couche tressées dans une bielle connue;
La figure 5 est une représentation schématique en section transversale montrant les fibres longitudinales d'une sous-couche de couche tressée dans une bielle obtenue conformément à un mode de mise en oeuvre de l'invention ;
La figure 6 est une représentation schématique en section transversale montrant les fibres longitudinales d'une sous-couche de couche tressée dans une bielle obtenue conformément au mode de réalisation de l'invention;
La figure 7 est une représentation schématique d'une portion d'un anneau d'une machine de tressage conformée pour former une tresse comprenant des fibres longitudinales de calibres différents conformément au mode de mise en oeuvre de l'invention ;
La figure 8A est une représentation schématique montrant en vue latérale un décalage axial mis en oeuvre dans l'opération de tressage conformément au second mode de réalisation de l'invention ;
La figure 8B est une représentation schématique dans un plan de coupe transversal de la bielle de la figure 8A montrant le mandrin ainsi que les fibres longitudinales de l'une des sous-couches des différentes couches tressées portées par ce mandrin ;
La figure 9 est une vue en perspective d'un premier exemple de bielle pouvant être fabriquée conformément au procédé selon l'invention ;
La figure 10A est une représentation schématique en vue latérale montrant un décalage axial mis en oeuvre dans l'opération de tressage conformément au second mode de réalisation de l'invention pour fabriquer une bielle comprenant une chape intermédiaire excentrée ;
La figure 10B est une représentation schématique dans un premier plan de coupe transversale de la bielle de la figure 10A montrant son mandrin ainsi que les fibres longitudinales de l'une des sous-couche des couches tressées que porte ce mandrin ;
La figure 10C est une représentation schématique dans un second plan de coupe transversale de la bielle de couches tressées que porte ce mandrin ;
La figure 11A est une vue en perspective d'une bielle à chape intermédiaire excentrée pouvant avantageusement être fabriquée conformément au procédé selon l'invention ;
La figure 11B est une première vue en coupe transversale de la bielle de la figure 11A ;
La figure 11C est une seconde vue en coupe transversale de la bielle de la figure 11A.

### DESCRIPTION DETAILLEE DE L'INVENTION

L'idée à la base de l'invention est de former et déposer sur un mandrin des couches de fibres renforçantes tressées de telle manière que les fibres longitudinales de ces couches présentent une plus grande densité d'un côté que de l'autre du mandrin.

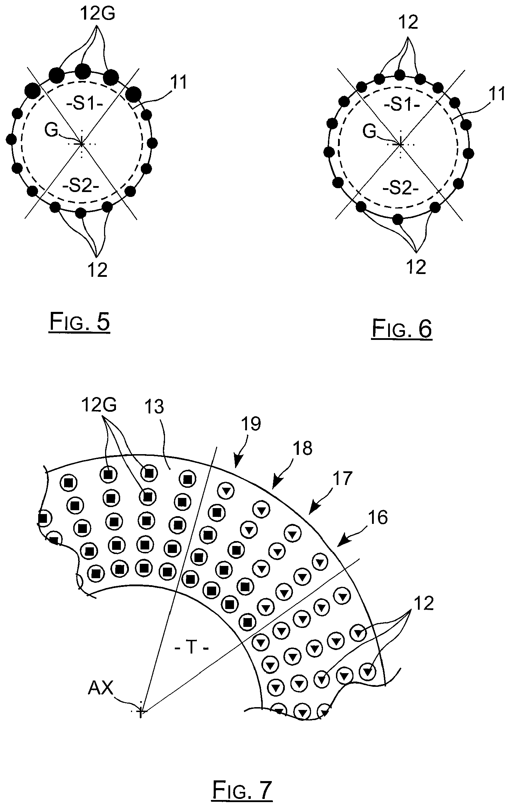

Ceci peut être obtenu en prévoyant des fibres longitudinales de plus gros calibre dans une région que dans une autre de la couche tressée, ce qui correspond à un mode de mise en oeuvre illustré par la figure 5. Ceci peut également être obtenu en utilisant des fibres longitudinales ayant toutes le même calibre, mais en en plaçant une plus grande quantité dans une région que dans une autre de la couche de fibres renforçantes, ce qui correspond au mode de réalisation illustré par la figure 6.

Pour illustrer la différence de densité, on a ainsi représenté dans les figures 5 et 6 deux régions ou secteurs angulaires S1 et S2 de même étendue angulaire, centrés tous deux sur le barycentre G d'une section transversale du mandrin 11 de l'organe fabriqué, et disposés de manière à être opposés l'un à l'autre. La région S1 est située dans la partie supérieure de l'organe alors que la région S2 est située dans la partie inférieure de l'organe.

Dans le cas de la figure 5, les régions S1 et S2 inférieure de l'organe.

Dans le cas de la figure 5, les régions S1 et S2 comportent toutes deux trois fibres longitudinales, mais les fibres longitudinales 12G comprises de la région supérieure S1 ont chacune une plus forte section que les fibres longitudinales 12 comprises dans la région inférieure S2. Ainsi, la densité de fibres longitudinales est significativement plus élevée dans la région supérieure que dans la région inférieure du fait que les fibres de la région supérieure ont une section supérieure à celles de la région inférieure.

Dans le cas de la figure 6, les fibres longitudinales 12 ont toutes le même calibre, c'est-à-dire la même section, mais la région supérieure S1 en comporte cinq alors que la région inférieure S2, n'en comporte que trois. Ici aussi, la densité de fibres longitudinales est plus importante dans le secteur S1 que dans le secteur S2, du fait que le nombre de fibres de la région supérieure est plus important que celui de la région inférieure.

Dans le mode de mise en oeuvre de l'invention, des bobines de fibres longitudinales 12G de gros calibre sont placées en partie supérieure de l'anneau 13 de la machine de tressage représentée partiellement en figure 7, et des bobines de fibres longitudinales 12, de plus faible calibre, sont placées sur le reste de l'anneau.

Dans la figure 7, les bobines de fibres longitudinales de gros calibre 12G sont symbolisées par des carrés, alors que les bobines de fibres longitudinales de plus faible calibre 12 sont symbolisées par des triangles.

Comme indiqué plus haut, chaque couche de fibres tressées est constituée de plusieurs épaisseurs ou sous-couches incluant chacune une série de fibres longitudinales disposées en claie, c'est-à-dire les unes à côté des autres. Dans l'exemple de la figure 7, l'anneau 13 comporte à cet effet cinq couronnes concentriques de bobines de fibres renforçantes espacées radialement les unes des autres par rapport à l'axe central AX, de manière à former une couche de fibres tressées constituée de cinq sous-couches.

Afin d'éviter un saut d'épaisseur trop brutal dans la région de transition des fibres longitudinales fines 12 vers les fibres longitudinales épaisses 12G, on prévoit avantageusement une distribution particulière des différentes bobines sur l'anneau de la machine de tressage.

Concrètement, et comme illustré en figure 7, les bobines sont agencées sur l'anneau 13 selon des colonnes radiales comportant chacune cinq bobines. On prévoit une zone de transition située dans le secteur angulaire repéré par T dans la figure 7, qui sépare la région inférieure de l'anneau 13 dans laquelle chaque colonne radiale comporte cinq bobines de fibres longitudinales de faible calibre, de la région supérieure de l'anneau dans laquelle chaque colonne radiale comporte cinq bobines de fibres renforçantes de fort calibre.

Dans cette zone de transition T comporte ici quatre colonnes radiales de bobines, repérées par 16 à 19. La première colonne radiale 16 de bobines comporte une bobine de fibres longitudinales de grosse section suivie de quatre bobines de fibres de faible section, cette première colonne étant contiguë à une colonne de la portion inférieure c'est-à-dire comportant uniquement des bobines de fibres de faible calibre.

La seconde colonne 17, contiguë à la première, comporte elle deux bobines fibres longitudinales de grande section suivie de trois bobines de fibres longitudinales de faible section. La troisième colonne 18, contiguë à la seconde comporte trois bobines de fibres de forte section suivies de deux bobines de fibres de faible section.

La quatrième colonne 19, contiguë à la troisième comporte quatre bobines de fibres de forte section et une seule bobine de fibres de faible section, et cette quatrième colonne est contiguë à une colonne de la région supérieure de l'anneau, c'est-à-dire une colonne comportant cinq bobines de fibres de fort calibre.

Cette zone de transition T assure que l'augmentation d'épaisseur de la couche de fibres renforçantes tressées est graduelle au lieu d'être brutale, ce qui contribue à obtenir, au cours du tressage, un niveau de tension homogène pour l'ensemble des fibres de la couche tressée.

Comme on l'aura compris, la fabrication d'un organe mécanique consiste à équiper la machine de tressage avec des fibres longitudinales de gros calibre et avec des fibres longitudinales de faible calibre, comme indiqué ci-dessus, en référence à la figure 7.

Un mandrin est ensuite installé sur l'axe central AX de cette machine de tressage, en étant concentrique à cet axe. Le mandrin est ensuite déplacé le long de cet axe central, en même temps que la machine de tressage est activée pour former la tresse de fibres renforçantes, au niveau d'une zone de convergence des fibres située sensiblement sur l'axe central AX en étant espacée du plan de l'anneau 13. Ce mandrin 11 a principalement pour rôle de supporter les différentes couches ou préformes tressées et de donner la forme interne de la pièce.

Lorsque le mandrin a passé la zone de convergence des fibres renforçantes, il porte une couche de fibres tressées. Cette couche peut alors être sectionnée entre le mandrin et l'anneau, avant de réinstaller ce mandrin en entrée de l'anneau 13, sur l'axe AX, pour le déplacer à nouveau le long de cet axe afin de former et déposer une nouvelle couche de fibres renforçantes sur la première couche tressée.

On procède de manière analogue pour former un nombre prédéterminé de couches de fibres renforçantes se superposant radialement les unes aux autres sur le mandrin qui est typiquement une pièce creuse généralement tubulaire.

Une fois que toutes les couches ont été déposées, l'élément obtenu présente dans sa région supérieure une épaisseur significativement supérieure à l'épaisseur qu'il a dans sa région inférieure, la différence d'épaisseur correspondant à une différence de densité de fibres longitudinales.

L'ensemble est ensuite installé dans un moule pour injection de résine dans les différentes couches déposées, avant de déclencher un cycle de chauffe pour polymériser cette résine. La pièce brute obtenue à ce stade est ensuite usinée pour former la pièce finie.

Dans le mode de réalisation de l'invention, l'augmentation de la densité de fibres longitudinales dans la région supérieure de chaque couche de fibres tressées est obtenue en décalant radialement le mandrin 11 par rapport à l'axe central AX de la tresseuse le long duquel ce mandrin est déplacé pour former et déposer les couches de fibres tressées.

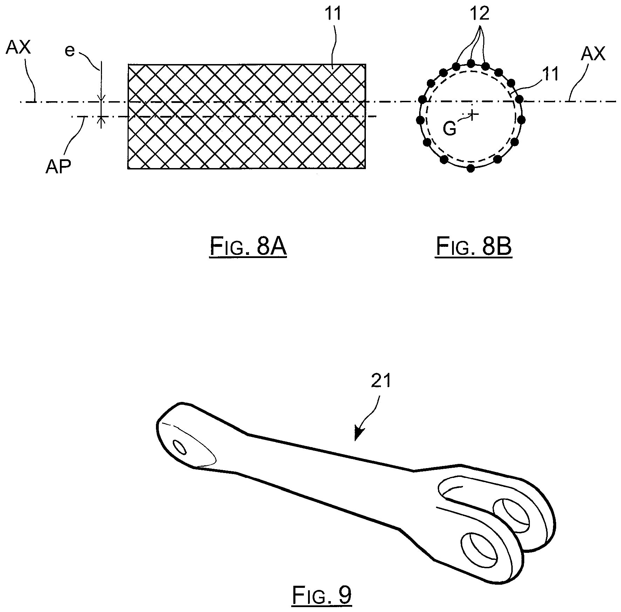

Comme représenté schématiquement dans les figures 8A et 8B, l'axe principal AP du mandrin est ici décalé vers le bas par rapport à l'axe central AX de la tresseuse, d'une valeur d'écart repérée par "e".

D'une manière générale, l'axe principal AP du mandrin 11 correspond à l'axe défini par les barycentres de deux sections transversales du mandrin situées dans une portion du mandrin correspondant au corps de l'organe fabriqué, c'est-à-dire à une portion régulière de ce mandrin, telle que sa portion tubulaire.

La formation et le dépôt d'une couche de fibres renforçantes conformément à ce second mode de réalisation de l'invention consiste ainsi à déplacer le mandrin le long de l'axe AX de la tresseuse tout en le maintenant décalé vers le bas par rapport à cet axe AX.

Dans ces conditions, lorsque le mandrin 11 atteint la zone de convergence des fibres, il est décalé vers le bas par rapport à celle-ci, de sorte que la tresse qui se forme au fur et à mesure de l'avance de ce mandrin 11 à travers cette zone de convergence comporte une plus grande quantité de fibres longitudinales dans sa région supérieure que dans sa région inférieure, comme illustré schématiquement dans la figure 8B.

Une fois que le mandrin a complètement traversé la zone de convergence, la tresse de fibres est sectionnée entre le mandrin et l'anneau. Le mandrin est ensuite replacé à l'entrée de l'anneau pour formation et dépôt d'une nouvelle couche de fibres renforçantes.

Tout comme dans le premier mode de réalisation, une fois que le nombre de couches de fibres tressées prédéfini a été déposé sur le mandrin, l'ensemble est placé dans un moule pour injection et polymérisation de résine, avant usinage pour former une pièce finie.

L'invention, tant dans le premier que dans le second mode de réalisation, permet de fabriquer des bielles simples telles que la bielle 21 de la figure 9, qui comporte un corps principal généralement tubulaire, et qui présente des extrémités pourvues chacune d'une chape.

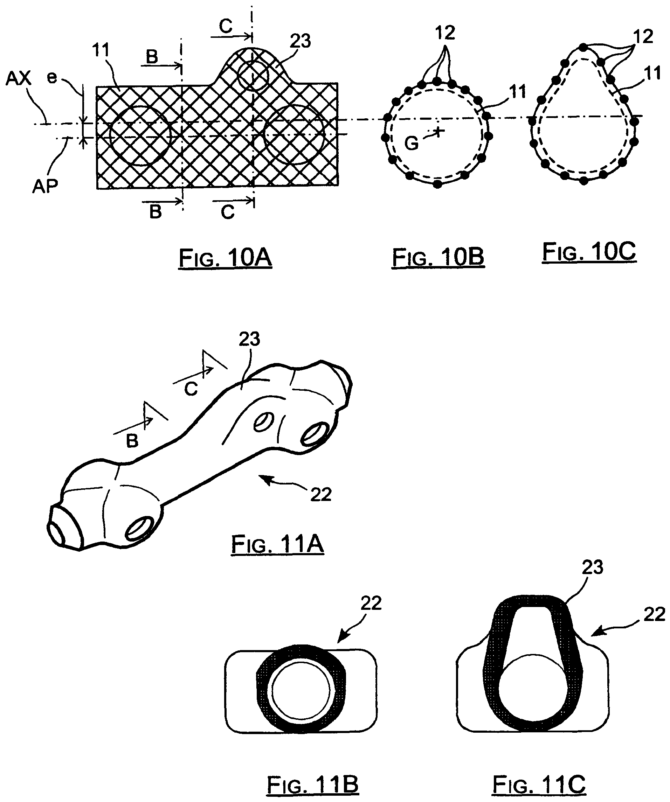

Mais l'invention s'applique également à la fabrication d'organes mécaniques de formes plus complexes, comme par exemple la bielle 22 représentée en figure 11, qui comporte un corps central généralement tubulaire avec une chape à chacune de ses extrémités, mais qui comporte également une chape intermédiaire. Cette chape intermédiaire qui est repérée par 23 est située entre ses extrémités et elle s'étend radialement par rapport à l'axe principal AP de la bielle.

Cette bielle 22 peut être fabriquée conformément au second mode de réalisation de l'invention, c'est-à-dire en équipant la machine de tressage de fibres longitudinales ayant toutes le même calibre, mais en décalant le mandrin 11 pour l'écarter de l'axe central AX de la tresseuse

En pratique, le mandrin 11 est alors positionné pour décaler son axe principal AP par rapport à l'axe AX, de manière à rapprocher la chape intermédiaire 23 de cet axe central AX, comme illustré sur la figure 10A.

Le mandrin 11 est ensuite déplacé dans la tresseuse le long de l'axe AX, en conservant ce décalage "e", pour former et déposer sur celui-ci une tresse de fibres renforçantes.

Une fois que le mandrin a passé le point de convergence des fibres renforçantes, celles-ci sont sectionnées entre le mandrin et l'anneau de la tresseuse. Le mandrin est ensuite replacé en entrée de la tresseuse, toujours avec le décalage radial "e", puis déplacé le long de l'axe AX pour formation et dépôt d'une autre couche de fibres renforçantes.

Ainsi, comme représenté schématiquement dans la figure 10B, dans la section transversale courante de la bielle, c'est-à-dire dans une portion de son corps principal ayant une forme tubulaire, la quantité de fibres renforçantes est plus importante en partie supérieure qu'en partie inférieure.

Dans la région correspondant à la chape intermédiaire 23, représentée en section transversale dans la figure 10C, les fibres renforçantes sont chape une tenue mécanique appropriée bien qu'elle constitue une excroissance dépassant radialement du corps de bielle.

La valeur d'excentration "e" peut aussi être ajustée pour que la quantité de fibres longitudinales de la partie supérieure soit plus importante que dans la partie inférieure, au niveau de la section courante de la bielle mais également au niveau de la chape intermédiaire 23.

Cet ajustement correspond au cas de la bielle de la figure 11A, qui présente une plus grande épaisseur de fibres en région supérieure dans sa section courante représentée en figure 11B, mais également dans la section passant par la chape intermédiaire 23 qui est représentée en figure 11C.

D'une manière analogue, la bielle 23 de la figure 11 peut également être fabriquée avec le premier mode de réalisation de l'invention, c'est-à-dire en équipant la portion supérieure de l'anneau de la tresseuse avec des fibres de plus fort calibre que les autres, et sans décaler le mandrin par rapport à l'axe central AX durant la formation et la dépose des couches de fibres renforçantes.

Dans les exemples ci-dessus, on a présenté séparément les deux modes de réalisation de l'invention, à savoir d'une part la possibilité de charger l'anneau de la tresseuse avec des fibres de calibres différents, et d'autre part la possibilité décaler radialement le mandrin par rapport à l'axe de la tresseuse, afin d'obtenir une densité de fibres longitudinales différente entre une région et une autre de chaque couche tressée.

Il convient de noter que ces deux approches présentées de manière distinctes peuvent avantageusement être combinées ensemble. Par exemple, il est possible de charger l'anneau de la tresseuse avec des fibres être combinées ensemble. Par exemple, il est possible de charger l'anneau de la tresseuse avec des fibres longitudinales de fort calibre dans la région supérieure et des fibres longitudinales de calibre normal dans les autres régions, et de plus de décaler le mandrin par rapport à l'axe de la tresseuse, de manière à obtenir une différence de densité des fibres renforçantes plus importante.

L'invention apporte notamment les avantages suivantes :
D'une manière générale, l'invention permet de faire varier l'épaisseur de matière afin de renforcer et épaissir les zones les plus fortement sollicitées, ce qui permet de fabriquer une pièce structurale performante à un coût de production compétitif.

Cette technique de fabrication est particulièrement adaptée aux pièces de type balancier, c'est-à-dire aux pièces sollicitées en flexion "trois points". Concrètement, ces pièces subissent des sollicitations mécaniques qui les font fléchir toujours dans la même direction.

Dans un cas de flexion par exemple vers le bas, la partie inférieure de la pièce est sollicitée en traction, alors que sa partie supérieure est sollicitée en compression. La contrainte en traction et la contrainte en compression sont sensiblement de mêmes valeurs, mais le matériau des fibres présente généralement une tenue à la compression qui est inférieure à sa tenue à la traction. En conséquence, il est opportun de renforcer la pièce dans la partie supérieure puisqu'elle y est sollicitée en compression, mais pas dans sa partie inférieure où elle est sollicitée uniquement en traction.

## Revendications

1. Procédé de fabrication d'un organe mécanique (21, 22) en matériau composite comportant plusieurs opérations de tressage et dépôt de couches de fibres renforçantes tressées, avec une tresseuse, chaque opération comprenant le tressage d'une couche de fibres renforçantes et son dépôt sur un mandrin (11) par déplacement de ce mandrin (11) le long d'un axe central (AX) de la tresseuse, les différentes couches de fibres tressées se superposant radialement les unes sur les autres, chaque couche de fibres tressées comportant d'une part des fibres longitudinales (12, 12G) s'étendant parallèlement à une direction principale (AP) du mandrin (11), et d'autre part des fibres de fuseau inclinées par rapport à la direction principale (AP), le procédé comprenant au moins une opération de tressage et de dépôt qui est configurée pour former et déposer une tresse ayant dans au moins une section transversale de l'organe (21, 22), une densité de fibres longitudinales (12, 12G) qui diffère selon que l'on considère une première région angulaire (S1) autour du barycentre (G) du mandrin (11) dans cette section transversale ou une seconde région angulaire (S2) de même étendue autour de ce barycentre (G),
**caractérisé en ce que** le procédé comporte au moins une opération de tressage et de dépôt d'une couche de fibres tressées, dans laquelle le mandrin (11) est positionné pour avoir son axe principal (AP) décalé radialement (e) par rapport à l'axe central (AX) de la tresseuse lorsque ce mandrin (11) est déplacé le long de l'axe central (AX) de la tresseuse, pour tresser et déposer une couche de fibres tressées présentant une quantité de fibres longitudinales (12) qui est plus importante dans une première région (S1) qui est la plus proche de l'axe central (AX) de la tresseuse, que dans une seconde région qui est la plus éloignée de l'axe central (AX) de la tresseuse.

2. Procédé selon la revendication 1, comportant au moins une opération de tressage et de dépôt d'une couche de fibres tressées qui est conformée pour constituer une couche de fibres tressées comportant des fibres longitudinales (12, 12G) ayant des calibres différents, et incluant des fibres longitudinales de fort calibre (12G) situées dans une première région (S1) de la couche tressée et des fibres longitudinales de faible calibre situées dans une seconde région (S2) de la couche tressée.

3. Procédé selon la revendication 2, dans lequel on utilise une tresseuse comportant un anneau de tressage (13) portant des bobines de fibres longitudinales (12, 12G) agencées de telle manière que chaque couche de fibres tressées soit constituée de plusieurs sous-couches superposées incluant chacune une série fibres longitudinales (12, 12G) agencées en claies, dans lequel une région de cet anneau (13) est chargée avec des bobines de fibres longitudinales de gros calibre (12G) et une autre région de cet anneau (13) est chargée avec des bobines de fibres longitudinales de faible calibre (12), et dans lequel la proportion de bobines de fibres de gros calibre (12G) et de bobines de fibres de faible calibre (12) évolue graduellement d'une région à l'autre de l'anneau.

## Patentansprüche

1. Verfahren zum Herstellen eines mechanischen Elements (21, 22) aus einem Verbundwerkstoff, umfassend mehrere Vorgänge des Flechtens und Aufbringens von Schichten aus geflochtenen Verstärkungsfasern mit einer Flechtmaschine, wobei jeder Vorgang das Flechten einer Schicht aus Verstärkungsfasern und deren Aufbringen auf einen Dorn (11) durch Verschieben dieses Dorns (11) entlang einer Mittelachse (AX) der Flechtmaschine umfasst, wobei sich die verschiedenen Schichten aus geflochtenen Fasern radial überlagern, wobei jede Schicht aus geflochtenen Fasern einerseits Längsfasern (12, 12G) umfasst, die sich parallel zu einer Hauptrichtung (AP) des Dorns (11) erstrecken, und andererseits Verflechtungsfasern, die schräg zur Hauptrichtung (AP) verlaufen, wobei das Verfahren mindestens einen Vorgang des Flechtens und Aufbringens umfasst, der so konfiguriert ist, dass er ein Geflecht bildet und aufbringt, das zumindest in einem Querschnitt des Elements (21, 22) eine Dichte von Längsfasern (12, 12G) hat, die sich unterscheidet, je nachdem, ob man einen ersten ringförmigen Bereich (S1) um den Schwerpunkt (G) des Dorns (11) in diesem Querschnitt oder einen zweiten ringförmigen Bereich (S2) gleicher Ausdehnung um diesen Schwerpunkt (G) betrachtet, **dadurch gekennzeichnet, dass** das Verfahren mindestens einen Vorgang des Flechtens und Aufbringens einer Schicht aus geflochtenen Fasern umfasst, bei dem der Dorn (11) so positioniert ist, dass seine Hauptachse (AP) in Bezug auf die Mittelachse (AX) der Flechtmaschine radial versetzt (e) ist, wenn dieser Dorn (11) entlang der Mittelachse (AX) der Flechtmaschine verschoben wird, um eine Schicht aus geflochtenen Fasern zu flechten und aufzubringen, die eine Menge an Längsfasern (12) aufweist, die in einem ersten Bereich (S1), der zur Mittelachse (AX) der Flechtmaschine am nächsten ist, größer ist als in einem zweiten Bereich, der von der Mittelachse (AX) der Flechtmaschine am weitesten entfernt ist.

2. Verfahren nach Anspruch 1, umfassend mindestens einen Vorgang des Flechtens und Aufbringens einer Schicht aus geflochtenen Fasern, die so ausgebildet ist, dass sie eine Schicht aus geflochtenen Fasern bildet, welche Längsfasern (12, 12G) umfasst, die unterschiedliche Durchmesser haben, und Längsfasern (12G) mit großem Durchmesser einschließt, die sich in einem ersten Bereich (S1) der geflochtenen Schicht befinden, sowie Längsfasern mit kleinem Durchmesser, die sich in einem zweiten Bereich (S2) der geflochtenen Schicht befinden.

3. Verfahren nach Anspruch 2, bei dem man eine Flechtmaschine verwendet, die einen Flechtring (13) umfasst, der Spulen von Längsfasern (12, 12G) trägt, die derart angeordnet sind, dass jede Schicht aus geflochtenen Fasern aus mehreren übereinander angeordneten Unterschichten besteht, die jeweils eine Reihe von Längsfasern (12, 12G) in Kammanordnung einschießen, wobei ein Bereich dieses Ringes (13) mit Spulen mit Längsfasern (12G) mit großem Durchmesser und ein anderer Bereich dieses Ringes (13) mit Spulen mit Längsfasern (12) mit kleinem Durchmesser bestückt ist, und bei dem sich das Verhältnis von Spulen mit Fasern (12G) mit großem Durchmesser und Spulen mit Fasern (12) mit kleinem Durchmesser nach und nach von einem Bereich zum anderen des Ringes ändert.

## Claims

1. A method of fabricating a mechanical member (21, 22) made of composite material, the method comprising a plurality of operations of braiding and depositing layers of braided reinforcing fibers by means of a braiding machine, each operation comprising braiding a layer of reinforcing fibers and depositing it on a mandrel (11) by moving the mandrel (11) along a central axis (AX) of the braiding machine, the various layers of braided fibers being superposed radially on one another, each layer of braided fibers having both longitudinal fibers (12, 12G) extending parallel to a main direction (AP) of the mandrel (11), and also interlacing fibers that are inclined relative to the main direction (AP), the method being **characterized in that** at least one braiding and deposition operation is configured to form and deposit a braid that presents, in at least one cross-section of the member (21, 22), a density of longitudinal fibers (12, 12G) that differs depending on whether consideration is given to a first angular region (S1) around the center of gravity (G) of the mandrel (11) in said cross-section or to a second angular region (S2) of the same extent around the center of gravity (G), wherein the method includes at least one operation of braiding and depositing a layer of braided fibers, wherein the mandrel (11) is positioned to have its main axis (AP) radially offset (e) relative to the central axis (AX) of the braiding machine while the mandrel (11) is being moved along the central axis (AX) of the braiding machine, so as to braid and deposit a layer of braided fibers presenting a quantity of longitudinal fibers (12) that is greater in a first region (S1) that is closer to the central axis (AX) of the braiding machine than in a second region that is farther from the central axis (AX) of the braiding machine.

2. A method according to claim 1, including at least one operation of braiding and depositing a layer of braided fibers that is performed to constitute a layer of braided fibers having longitudinal fibers (12, 12G) of different sizes, and including longitudinal fibers of large size (12G) situated in a first region (S1) of the braided layer and longitudinal fibers of small size situated in a second region (S2) of the braided fiber.

3. A method according to claim 2, wherein a braiding machine is used having a braiding ring (13) carrying reels of longitudinal fibers (12, 12G) arranged in such a manner that each layer of braided fibers is made up of a plurality of superposed sublayers, each including a series of longitudinal fibers (12, 12G) in a comb arrangement, wherein one region of the ring (13) is loaded with reels of large-size longitudinal fibers (12G) and another region of the ring (13) is loaded with reels of small-size longitudinal fibers (12), and wherein the proportion of reels carrying large-size fibers (12G) and of reels carrying small-size fibers (12) varies gradually from one region of the ring to another.
